# EUROPÄISCHE PATENTANMELDUNG

(11) **EP 1 684 385 A2**
(43) Veröffentlichungstag der Anmeldung: **26.07.2006**
(21) Anmeldenummer: 06090004.0
(22) Anmeldetag: 11.01.2006
(51) Int. Cl.: H01R 9/03

(54) **Elektrisches System für ein Schienenfahrzeug**

(30) Priorität: 19.01.2005 DE 202005000594 U
(71) Anmelder: GSP Sprachtechnologie Gesellschaft für elektronische Sprachsysteme mbH, 12247 Berlin (DE)
(72) Erfinder: Loebner, Helmut dr. c/o GSP Sprachtechnologie GmbH, 12247 Berlin (DE); Hettwer,Gerhard Dr. c/o GSP Sprachtechnologie GmbH, 12247 Berlin (DE); Nulis, Kostas Dr. c/o GSP Sprachtechnologie GmbH, 12247 Berlin (DE)
(74) Vertreter: Jungblut, Bernhard Jakob

(57) **Zusammenfassung**

Die Erfindung betrifft ein elektrisches System für ein Schienenfahrzeug (1) mit zumindest zwei miteinander verbundenen Wagen (2), wobei jeder Wagen von Stromversorgungsleitungen (3) und/ oder Datenleitungen (3) von einem Wagenende zum anderen Wagenende durchspannt ist, wobei die Stromversorgungsleitungen (3) und/oder Datenleitungen (3) verschiedener Wagen über eine Kabelverbindung (4) miteinander verbunden sind, wobei die Kabelverbindung (4) zumindest ein Steckerteil (6) und ein zum Steckerteil (6) komplementäres Geräteteil (5) aufweist, wobei das Steckerteil (6) einen im Wesentlichen hohlzylinderförmigen Führungsring (7) und das Geräteteil (5) eine zum Führungsring (7) komplementäre Führungsausnehmung (8) aufweist, dadurch gekennzeichnet, dass das Steckerteil (6) außerhalb des Führungsrings (7) und hierzu beabstandet ein sich parallel zum Führungsring (7) erstreckendes Satellitensteckelement (9) aufweist, und dass das Geräteteil 5 ein zum Satellitensteckelement (9) komplementäres Satellitengeräteelement (10) aufweist, wobei das Satellitensteckelement (9) zumindest einen Satellitensteckkontakt (11) und das Satellitengeräteelement (10) zumindest einen Satellitengerätekontakt (12) aufweist, wobei der Satellitensteckkontakt (11) und der Satellitengerätekontakt (12) als zueinander komplementäres Satellitenkontaktpaar ausgebildet sind.

## Beschreibung

### Gebiet der Erfindung

Die Erfindung betrifft ein elektrisches System für ein Schienenfahrzeug mit zumindest zwei miteinander verbundenen Wagen, wobei jeder Wagen von Stromversorgungsleitungen und/oder Datenleitungen von einem Wagenende zum anderen Wagenende durchspannt ist, wobei die Stromversorgungsleitungen und/oder Datenleitungen verschiedener Wagen über eine Kabelverbindung miteinander verbunden sind, wobei die Kabelverbindung zumindest ein Steckerteil und ein zum Steckerteil komplementäres Geräteteil aufweist, wobei das Steckerteil einen im Wesentlichen hohlzylinderförmigen Führungsring und das Geräteteil eine zum Führungsring komplementäre Führungsausnehmung aufweist.

### Stand der Technik und Hintergrund der Erfindung

Aus der Praxis ist das eingangs genannte elektrische System bekannt, wobei das Steckerteil sowie das Geräteteil als sog. UIC-Steckverbindung bezeichnet ist. Es handelt sich typischerweise um eine 18-polige Steckverbindung, wobei über die Kontaktpaare sowohl Stromversorgungsleitungen als auch Datenleitungen verschiedener Wagen miteinander kontaktiert werden.

Die insofern bekannte Steckverbindung hat sich in der Praxis gut bewährt. Im Zuge der Einführung neuer Technologien in Schienenfahrzeugen, insbesondere Technologien der Kommunikationstechnik, sind jedoch die vorhandenen Datenleitungen in ihrer Anzahl sowie der nutzbaren Bandbreite nicht mehr ausreichend. Die Begrenzung der Bandbreite hängt im Wesentlichen damit zusammen, dass die Datenleitungen mit elektrischen Leitern arbeiten.

Grundsätzlich wäre eine Aufrüstung durch Ersatz der UIC-Steckverbindungen durch leistungsfähigere Steckverbindungen, beispielsweise mit einer höheren Anzahl Kontaktpaare oder Ersatz von Kontaktpaaren durch Kontaktpaare von optischen Wellenleitern, möglich. Dies würde jedoch eine gleichzeitige Umrüstung aller im Bestand befindlichen Wagen bzw. Schienenfahrzeuge erforderlich machen mit der Folge, dass beträchtlicher Umrüstungsaufwand besteht. Hinzu kommt, dass eine internationale Kompatibilität im grenzüberschreitenden Schienenfahrzeugverkehr entfallen würde.

Wünschenswert wäre daher eine Verbesserung der bekannten UIC-Steckverbindung, wobei insbesondere Abwärtskompatibilität gewährleistet wäre, i.e. dass auch eine Verbindung beispielsweise eines aufgerüsteten Steckerteils mit einem regulären UIC-Geräteteil sowohl mechanisch als auch elektrisch bzw. kommunikationstechnisch möglich ist.

### Technisches Problem der Erfindung

Der Erfindung liegt daher das technische Problem zugrunde, eine Steckverbindung für Schienenfahrzeuge anzugeben, welche in Hinblick auf die Leistungsfähigkeit von Datenleitungen verbessert ist, wobei gleichzeitig Abwärtskompatibilität gewährleistet wird.

Grundzüge der Erfindung und bevorzugte Ausführungsformen

Zur Lösung dieses technischen Problems lehrt die Erfindung, dass das Steckerteil außerhalb des Führungsrings und hierzu beabstandet ein sich parallel zum Führungsring erstreckenden Satellitensteckelement aufweist und dass das Geräteteil ein zum Satellitensteckelement komplementäres Satellitengeräteelement aufweist, wobei das Satellitensteckelement zumindest einen Satellitensteckkontakt und das Satellitengeräteelement einen Satellitengerätekontakt aufweist, wobei der Satellitensteckkontakt und der Satellitengerätekontakt als zueinander komplementäres Satellitenkontaktpaar ausgebildet sind.

Eine erfindungsgemäß eingesetzte Steckverbindung erlaubt die Einrichtung zusätzlicher Leitungen, insbesondere Datenleitungen in einem Wagen bzw. einem aus mehreren Wagen gebildeten Schienenfahrzeug. Dadurch, dass das Satellitensteckelement außerhalb des Führungsrings und hierzu beabstandet angeordnet ist, kann ein erfindungsgemäßes Steckerteil auch nach wie vor auf ein herkömmliches UIC-Geräteteil aufgesteckt werden. Hierbei bleibt dann der Satellitensteckkontakt mangels Anwesenheit eines Satellitengeräteelements unkontaktiert. Entsprechendes gilt selbstverständlich umgekehrt im Falle eines erfindungsgemäßen Geräteteils, in welches ein herkömmliches UIC-Steckerteil eingeführt wird. Hierdurch wird eine mechanische und elektrische Abwärtskompatibilität erreicht.

Typischerweise sind an beiden Wagenenden eines Wagens Geräteteile installiert, wobei zwei einander gegenüberliegende Geräteteile verschiedener Wagen über eine mit zwei Steckerteilen ausgestattete Kabelverbindungen miteinander verbunden sind. Selbstverständlich ist aber auch möglich, daß das Verbindungskabel an einem Wagenende fest installiert ist und am anderen Ende ein Steckerteil aufweist, welches in ein Geräteteil eines gegenüberliegenden Wagenendes eingeführt wird. Der Führungsring eines Steckerteils und die hierzu komplementäre Führungsausnehmung sind in dem Sinne im Wesentlichen hohlzylinderförmig, als dass auch Vielecke einsetzbar sind.

Grundsätzlich kann ein Satellitenkontaktpaar entweder als elektrisches Kontaktpaar oder als optisches Kontaktpaar ausgebildet sein. Der Einsatz eines optischen Kontaktpaars ist insofern vorteilhaft, als dass optische Datenleitungen eine gegenüber elektrischen Datenleitungen beachtlich erhöhte Bandbreite aufweisen, i.e. die Datenübertragungsraten sind beträchtlich erhöht.

Das Satellitengeräteelement und das Satellitensteckelement können zwei bis zehn Satellitenkontaktpaare aufweisen. Diese Satellitenkontaktpaare können auch im Rahmen mehrerer Satellitengeräteelemente und Satellitensteckelemente eingerichtet sein. In einer Ausführungsform weist das Steckerteil mehrere, vorzugsweise zwei bezogen auf eine Mittelachse des Führungsrings gegenüberliegende, Satellitensteckelemente auf, wobei das Geräteteil zu den Satellitensteckelementen komplementäre Satellitengeräteelemente aufweist. Hierdurch lassen sich insgesamt eine Mehrzahl elektrischer oder optischer Kontaktpaare und folglich Datenleitungen zusätzlich zu den 18 Polen der herkömmlichen UIC-Steckverbindungen aufrüsten.

Bevorzugt ist es, dass jeder Wagen eine zentrale Prozessoreinheit aufweist, wobei zumindest eine Datenleitung mit einem Satellitengerätekontakt und/oder einem Satellitensteckkontakt verbunden ist. Mittels der Prozessoreinheit kann eine Prüfroutine durchgeführt werden, mittels welcher detektierbar ist, ob bei ineinander gestecktem Steckerteil und Geräteteil ein zu einem Satellitengeräteelement oder Satellitensteckelement komplementäres Satellitensteckelement oder Satellitengeräteelement kontaktiert ist. Mit anderen Worten ausgedrückt, die Prüfroutine testet, ob nach Herstellung der Steckverbindung ein erfindungsgemäßes Satellitengeräteelement oder Satellitensteckelement ein komplementäres Satellitenelement "gefunden" hat. Bejahendenfalls erfolgt die Datenkommunikation zwischen Prozessoreinheiten verschiedener Wagen über das kontaktierte Satellitenkontaktpaar. Verneinendenfalls stellt die Prozessoreinheit eines Wagens mit einem erfindungsgemäßen Satellitengeräteelement oder Satellitensteckelement das Betriebsprogramm um auf Routinen, welche mit der herkömmlichen UIC-Steckverbindung arbeiten. Somit wird auch eine funktionelle Abwärtskompatibilität eingerichtet.

Von selbstständiger Bedeutung ist eine alternative Ausführungsform eines elektrischen Systems für ein Schienenfahrzeug, wobei zusätzliche optische Leiter nicht im Rahmen von Satellitenelementen angeordnet sind, sondern vielmehr in geometrisch freien Bereichen der Isolierkörper des Steckerelements und des Geräteelementes oder anstelle eines (herkömmlichen) Kontaktstiftes und einer Kontaktbuchse. Dies ist beispielsweise im Falle der UIC Steckverbindungen einrichtbar. Dann sind in den jeweiligen Isolierkörpern zueinander komplementäre optische Abschlüsse bzw. Enden eingerichtet. Es entsteht insofern eine hybride UIC Steckverbindung, wobei zusätzlich zu den elektrischen Kontaktpaaren und/oder anstelle eines oder mehrerer elektrischer Kontaktpaare ein optisches Kontaktpaar eingerichtet ist, jedoch keine Satellitenelemente benötigt werden (aber vorhanden sein können). Ansonsten gelten die vorstehenden Ausführungen analog, insbesondere auch bezüglich der Abwärtskompatibilität.

Bezüglich optischer Kontaktpaare, in welcher Alternative auch immer, kann vorgesehen sein, dass die einander gegenüberliegenden Enden der optischen Leiter jeweils mit einer optischen Streulinse versehen sind, die eine Aufweitung des aus einem Ende emittierten Lichtes sowie eine Fokussierung des vom gegenüberliegenden Ende empfangenen aufgeweiteten Lichts bewirken. Eine solche Variante erlaubt es, dass die bei einem optischen Kontaktpaar einander gegenüberliegenden Enden der optischen Leiter nicht in physikalischen Kontakt gebracht werden müssen. Ein Abstand einander gegenüberliegender Enden (bei hergestellter Steckverbindung) im Bereich von 0,1 bis 20 mm, insbesondere von 0,1 bis 2 mm, ist für die optische Kontaktierung ausreichend. Dies ist vorteilhaft, da bei einem erfindungsgemäßen elektrischen System regelmäßig Steckverbindungen gelöst und hergestellt werden, und die vorstehende Gestaltung eines optischen Kontaktpaares bei solchen Betätigungszyklen weniger störanfällig ist.

Im Folgenden wird die Erfindung anhand von lediglich ein Ausführungsbeispiel darstellenden Zeichnungen näher erläutert. Es zeigen:
- Figur 1:: ein Schienenfahrzeug mit einem erfindungsgemäßen elektrischen System in schematischer Darstellung,
- Figur 2:: eine Aufsicht auf ein erfindungsgemäß eingesetztes Geräteteil (a) und hierzu komplementäres Steckerteil (b),
- Figur 3:: eine Schrägansicht der Gegenstände der Figur 2 und
- Figur 4:: eine Detailansicht eines erfindungsgemäß ausgerüsteten Schienenfahrzeugs, wobei ein Wagen mit einem erfindungsgemäßen Geräteteil mit einem Wagen mit einem herkömmlichen UIC-Geräteteil verbunden ist.

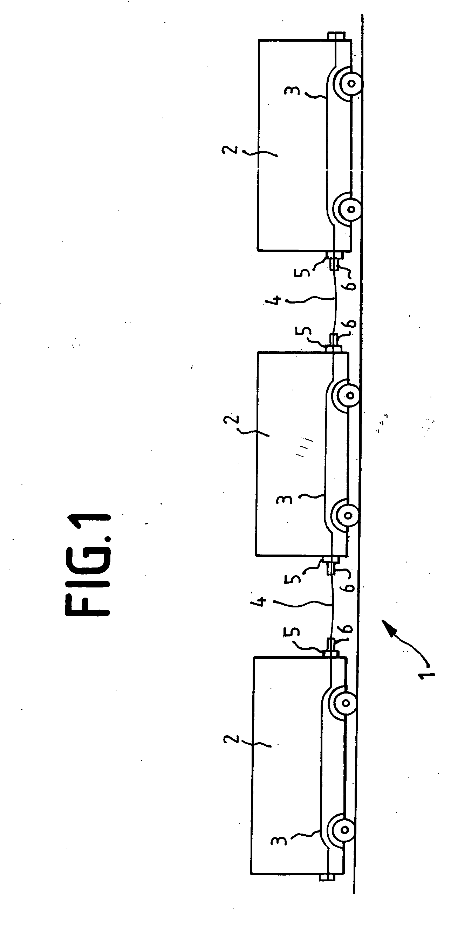

In der **Figur 1** erkennt man ein Schienenfahrzeug 1 mit drei miteinander verbundenen Wagen 2, wobei jeder Wagen von Stromversorgungsleitungen 3 und Datenleitungen 3 von einem Wagenende zum anderen Wagenende durchspannt ist. Die Stromversorgungsleitungen und Datenleitungen sind in dieser schematischen Darstellung nicht separat wiedergegeben. Die Stromversorgungsleitungen 3 und Datenleitungen 3 verschiedener Wagen sind über die Kabelverbindung 4 miteinander verbunden. Jede Kabelverbindung 4 weist an gegenüberliegenden Enden jeweils ein Steckerteil 6 auf. Jeweils ein Stekkerteil 6 einer Kabelverbindung 4 ist in ein Geräteteil 5 einander gegenüberliegender Wagenenden eingesteckt.

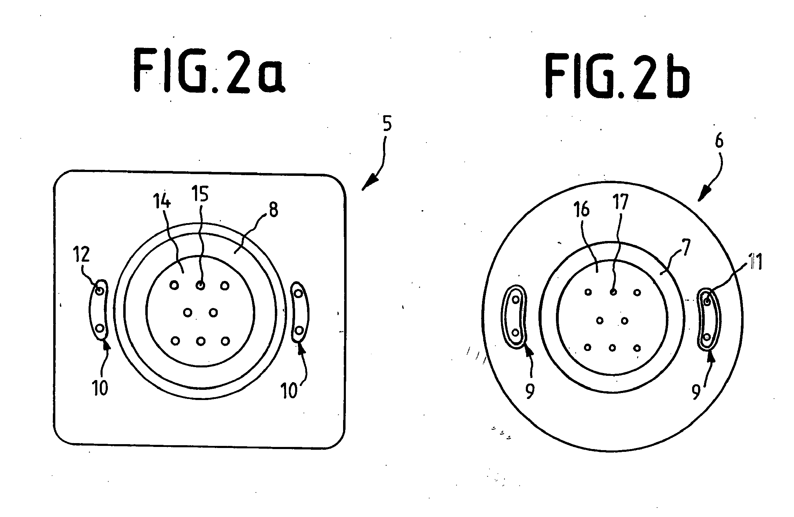

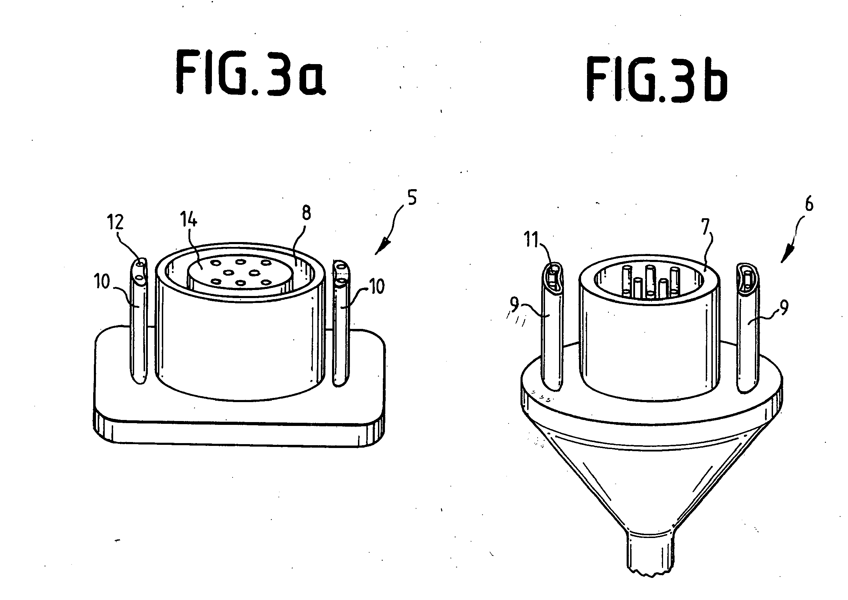

Der **Figur 2** sowie einer vergleichenden Betrachtung der Figurenteile 2a und 2b entnimmt man, dass das Steckerteil 6 einen im Wesentlichen hohlzylinderförmigen Führungsring 7 und das Geräteteil 5 eine zum Führungsring 7 komplementäre Führungsausnehmung 8 aufweist. Das Steckerteil 6 weist außerhalb des Führungsrings 7 und hierzu beabstandet ein sich parallel zum Führungsring 7 erstreckendes Satellitensteckelement 9 auf. Das Geräteteil 5 weist ein zum Satellitensteckelement 9 komplementäres Satellitengeräteelement 10 auf. Hierzu wird ergänzend auf die Schrägansicht der Figur 3 verwiesen. Man erkennt aus einer Betrachtung beider Figuren des Weiteren, dass das Geräteteil 5 einen Isolierkörper 14 aufweist, in welchen elektrische Kontaktbuchsen 15 eingebettet sind. Das Steckerteil 6 weist ebenfalls einen Isolierkörper 16 auf, wobei jedoch Kontaktstifte 17 über diesen Isolierkörper 16 herausragen. In analoger Weise sind die Satellitensteckerelemente 9 und Satellitengeräteelemente 10 aufgebaut, wobei im Falle der Satellitensteckerelemente 9 im Wesentlichen bohnenförmige Führungsringe eingerichtet sind. Selbstverständlich sind gegenüber der dargestellten Weise das Satellitensteckelement 9 und das Satellitengeräteelement 10 in Bezug auf die dargestellten Ausführungsformen gegeneinander vertauschbar, ohne dass die Funktion hierdurch verändert wird. Man erkennt, dass jedes Satellitensteckelement 9 zwei Satellitensteckkontakte 11 und jedes Satellitengeräteelement 10 zwei Satellitengerätekontakte 12 aufweist, wobei die Satellitensteckkontakte 11 und die Satellitengerätekontakte 12 zueinander komplementäre Satellitenkontaktpaare bilden. Zumindest ein Satellitenkontaktpaar ist als optisches Kontaktpaar ausgebildet. Die beiden Satellitensteckelemente 9 sind bezogen auf die Mittelachse des Führungsrings 7 einander gegenüberliegend. Die Satellitengeräteelemente 10 sind in komplementärer Weise im Rahmen des Geräteteils 5 eingerichtet.

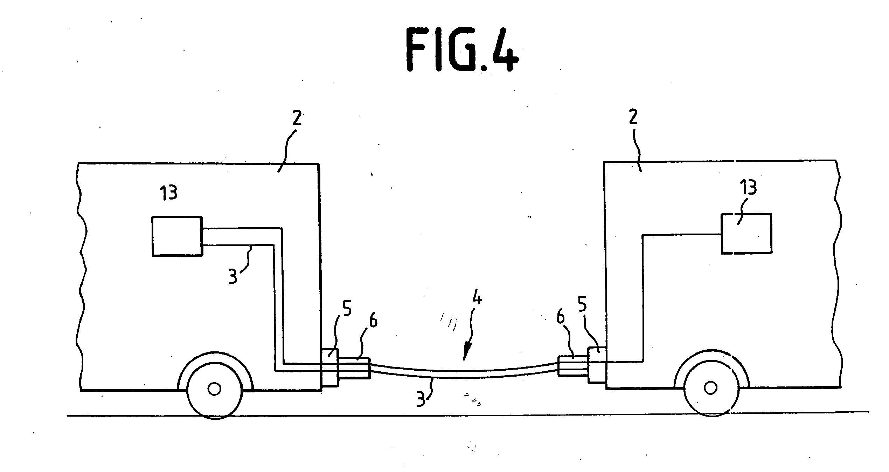

Der Figur 4 ist eine Verbindung zwischen zwei Wagen eines Schienenfahrzeugs entnehmbar, wobei einer der beiden Wagen (rechtsseitig) ein herkömmliches UIC-Geräteteil aufweist. Aufgrund der geometrischen Ausbildung, wie in den Figuren 2 und 3 dargestellt, kann das rechtsseitige Steckerteil 6 der Kabelverbindung 4 in das herkömmliche UIC-Geräteteil 5 des rechten Wagens 2 eingesteckt werden. Beide Wagen 2 weisen jeweils einen Zentralprozessor 13 auf. Nach der Herstellung der Kabelverbindung 4 prüft der Zentralprozessor 13 des linksseitigen Wagens, ob über die Datenleitung 3 der Kabelverbindung 4 eine Kommunikation mit dem Zentralprozessor 13 des rechtsseitigen Wagens möglich ist. In der Darstellung der Figur 4 erfolgt ein solcher Datenaustausch nicht, da die Datenleitung 3, welche im Rahmen eines Satellitensteckelements 9 eingerichtet ist, mangels Satellitengeräteelement 10 an dem herkömmlichen UIC-Geräteteil kein Satellitenkontaktpaar bildet. Hierauf wird das Betriebsprogramm des linksseitigen Zentralprozessors 13 auf Datenkommunikation über herkömmliche Leitungen einer üblichen UIC-Steckverbindung umgeschaltet und der linksseitige erfindungsgemäß ausgestattete Wagen 2 ist abwärtskompatibel mit dem herkömmlichen rechtsseitigen Wagen 2 datentechnisch verbunden.

Insbesondere bei Einsatz "gemischter" Schienenfahrzeuge, i.e. mit Wagen, die herkömmliche UIC-Geräteteile 5 aufweisen, und Wagen, die erfindungsgemäße Geräteteile aufweisen, wird es sich empfehlen, Schutzkappen bzw. Schutzstopfen für nicht kontaktierte Satellitensteckelemente 9 bzw. Satellitengeräteelemente 10 vorzusehen. Dies verhindert eine Verschmutzung elektrischer Kontakte und insbesondere der empfindlichen optischen Kontakte. Alternativ zu einfachen Schutzkappen bzw. Schutzstopfen können auch im Zuge der Kontaktierung sich zurückziehende Schutzelemente eingerichtet sein. Dem Fachmann sind solche Konstruktionen aus anderen Zusammenhängen wohl bekannt. Ansonsten kann eine erfindungsgemäß einsetzte Steckverbindung alle mechanischen Merkmale einer herkömmlichen UIC-Verbindung aufweisen, insbesondere auch Schnappdeckel und Hebelverriegelung im Rahmen eines Geräteteils 5.

### Bezugszeichen:

- 1: Schienenfahrzeug
- 2: Wagen
- 3: Stromversorgungsleitung, Datenleitung
- 4: Kabelverbindung
- 5: Geräteteil
- 6: Steckerverbindung
- 7: Führungsring
- 8: Führungsausnehmung
- 9: Satellitensteckelement
- 10: Satellitengeräteelement
- 11: Satellitensteckkontakt
- 12: Satellitengerätekontakt
- 13: Zentralprozessor
- 14: Isolierkörper
- 15: Kontaktbuchsen
- 16: Isolierkörper
- 17: Kontaktstifte

## Patentansprüche

1. Elektrisches System für ein Schienenfahrzeug (1) mit zumindest zwei miteinander verbundenen Wagen (2), wobei jeder Wagen von Stromversorgungsleitungen (3) und/oder Datenleitungen (3) von einem Wagenende zum anderen Wagenende durchspannt ist, wobei die Stromversorgungsleitungen (3) und/oder Datenleitungen (3) verschiedener Wagen über eine Kabelverbindung (4) miteinander verbunden sind, wobei die Kabelverbindung (4) zumindest ein Steckerteil (6) und ein zum Steckerteil (6) komplementäres Geräteteil (5) aufweist, wobei das Steckerteil (6) einen im Wesentlichen hohlzylinderförmigen Führungsring (7) und das Geräteteil (5) eine zum Führungsring (7) komplementäre Führungsausnehmung (8) aufweist,
**dadurch gekennzeichnet,**
**dass** das Steckerteil (6) außerhalb des Führungsrings (7) und hierzu beabstandet ein sich parallel zum Führungsring (7) erstreckendes Satellitensteckelement (9) aufweist, und dass das Geräteteil 5 ein zum Satellitensteckelement (9) komplementäres Satellitengeräteelement (10) aufweist, wobei das Satellitensteckelement (9) zumindest einen Satellitensteckkontakt (11) und das Satellitengeräteelement (10) zumindest einen Satellitengerätekontakt (12) aufweist, wobei der Satellitensteckkontakt (11) und der Satellitengerätekontakt (12) als zueinander komplementäres Satellitenkontaktpaar ausgebildet sind.

2. Elektrisches System nach Anspruch 1, **dadurch gekennzeichnet, dass** das Satellitenkontaktpaar ein elektrisches oder optisches Kontaktpaar ist.

3. Elektrisches System nach Anspruch 1 oder 2, **dadurch gekennzeichnet, dass** das Satellitengeräteelement (10) und das Satellitensteckelement (9) zwei bis zehn Satellitenkontaktpaare aufweist.

4. Elektrisches System nach einem der Ansprüche 1 bis 3, **dadurch gekennzeichnet, dass** das Steckerteil (6) mehrere, vorzugsweise zwei bezogen auf eine Mittelachse des Führungsrings (7) gegenüber liegende Satellitensteckelemente (9) aufweist und dass das Geräteteil (5) zu den Satellitensteckelementen (9) komplementäre Satellitengeräteelemente (10) aufweist.

5. Elektrisches System nach einem der Ansprüche 1 bis 4, **dadurch gekennzeichnet, dass** jeder Wagen (2) eine zentrale Prozessoreinheit (13) aufweist, wobei zumindest eine Datenleitung (3) mit einem Satellitengerätekontakt (12) und/oder einem Satellitensteckkontakt (11) verbunden ist.

6. Elektrisches System nach einem der Ansprüche 1 bis 5, **dadurch gekennzeichnet, dass** mittels der Prozessoreinheit (13) eine Prüfroutine durchführbar ist, mittels welcher detektierbar ist, ob bei ineinander gestecktem Steckerteil (6) und Geräteteil (5) ein zu einem Satellitengeräteelement (10) oder Satellitensteckelement (9) komplementäres Satellitensteckelement (9) oder Satellitengeräteelement (19) kontaktiert ist.
